# EUROPÄISCHE PATENTSCHRIFT

(11) **EP 1 985 997 B1**
(45) Veröffentlichungstag und Bekanntmachung des Hinweises auf die Patenterteilung: **09.01.2013**
(21) Anmeldenummer: 08005253.3
(22) Anmeldetag: 20.03.2008
(51) Int. Cl.: G01N 21/90, B07C 5/34

(54) **Inspektionsvorrichtung für Behältnisse**
Inspection device for containers
Dispositif d'inspection pour récipients

(30) Priorität: 27.04.2007 DE 102007020460
(43) Veröffentlichungstag der Anmeldung: 29.10.2008
(73) Patentinhaber: KRONES Aktiengesellschaft, 93073 Neutraubling (DE)
(72) Erfinder: Kwirandt, Rainer, Dr., 93092 Barbing (DE)
(74) Vertreter: Bittner, Bernhard

(56) Entgegenhaltungen:
- EP-A- 1 477 794
- DE-A1- 10 140 010
- US-A- 5 729 340
- US-A- 6 072 575

## Beschreibung

Die Erfindung betrifft eine Inspektionsvorrichtung für Behältnisse und insbesondere für Flaschen oder sonstige Gefäße. Derartige Vorrichtungen sind aus dem Stand der Technik bekannt und dienen beispielsweise dazu, sich auf einem Transportband bewegende Behältnisse und insbesondere Flaschen während der Bewegung zu untersuchen. Ein Aspekt derartiger Untersuchungen ist beispielsweise, ob ein an den Flaschen angebrachtes Etikett gerade sitzt, oder ob es Verwerfungen, Knicke oder dergleichen aufweist. Aus der EP 1 477 794 A1 ist eine Inspektionsvorrichtung für Flaschen bekannt, bei der die Flaschen von oben beleuchtet werden und die Mantelfläche der Behältnisse auf einer Bildaufnahmeeinrichtung abgebildet wird.

Bei dem Gegenstand der EP 1 477 794 A1 wird das Behältnis von nur einer Lichtquelle sowohl mit Durchlicht als auch mit Auflicht beaufschlagt. Dieses Verfahren ist im Allgemeinen zufrieden stellend. Bei speziellen Behältnissen, insbesondere dunklen Behältnissen, welche ebenfalls dunkle bzw. schwarze Etiketten aufweisen, wird jedoch ein hoher Anteil des auf das Behältnis gesandten Lichtes absorbiert und damit steht nicht mehr genügend gestreutes oder allgemein zurückgeworfenes Licht zur Verfügung, um eine ordnungsgemäße Untersuchung der Etiketten zu ermöglichen. In der US-A-6 072 575 wird auf die Inspektion von Etiketten Bezug genommen. Dabei sind Beleuchtungseinrichtungen vorgesehen, welche das Behältnis oben und von der Seite her beleuchten. Der vorliegenden Erfindung liegt daher die Aufgabe zugrunde, eine Vorrichtung zur Verfügung zu stellen, welche auch die Untersuchung von Behältnissen mit stark strahlungsabsorbierender Oberfläche, insbesondere von Behältnissen mit dunklen oder schwarzen Etiketten erlaubt. Dies wird erfindungsgemäß durch den Gegenstand von Anspruch 1 erreicht. Vorteilhafte Ausführungen und Weiterbildungen sind Gegenstand der Unteransprüche.

Die erfindungsgemäße Inspektionsvorrichtung für Behältnisse weist eine erste Beleuchtungseinrichtung auf, welche wenigstens einen Anteil der Mantelfläche des Behältnisses beleuchtet. Daneben weist die Inspektionsvorrichtung eine Bildaufnahmeeinrichtung auf, welche das von der Beleuchtungseinrichtung auf die Mantelfläche ausgestrahlte und von der Mantelfläche zurückgeworfene - insbesondere gestreute - Licht wenigstens teilweise aufnimmt, wobei die erste Beleuchtungseinrichtung in einer Längsrichtung des Behältnisses wenigstens teilweise oberhalb des von der ersten Beleuchtungseinrichtung beleuchteten Anteils der Mantelfläche angeordnet ist.

Erfindungsgemäß weist die Inspektionsvorrichtung eine zweite Beleuchtungseinrichtung auf, die einen Anteil der Mantelfläche beleuchtet, wobei die zweite Beleuchtungseinrichtung in der Längsrichtung des Behältnisses unterhalb sämtlicher von beiden Beleuchtungseinrichtung beleuchteten Anteile der Mantelfläche und seitlich versetzt dazu angeordnet ist.

Bevorzugt ist die zweite Beleuchtungseinrichtung vollständig unterhalb des Behältnisses und die erste Beleuchtungseinrichtung vollständig oberhalb des Behältnisses angeordnet. Mit anderen Worten befindet sich das zu inspizierende Behältnis während der Inspektion im Wesentlichen zwischen den beiden Beleuchtungseinrichtungen.

Damit wird das Behältnis sowohl von oben als auch von unten beleuchtet und damit ist auch bei dunklen Etiketten eine zufriedenstellende Ausleuchtung des Etiketts möglich. Vorzugsweise sind die Anteile der Mantelfläche, welche von den beiden Beleuchtungseinrichtungen beleuchtet werden, weitgehend deckungsgleich. Es ist jedoch möglich, dass ein bestimmter Bereich am unteren Behältnis nur von der oberen Beleuchtungseinrichtung und nicht von der unteren Beleuchtungseinrichtung beleuchtet wird. Damit befindet sich bevorzugt die untere Beleuchtungseinrichtung unterhalb sämtlicher von beiden Beleuchtungseinrichtungen beleuchteter Bereiche und die erste Beleuchtungseinrichtung befindet sich oberhalb sämtlicher von beiden Beleuchtungseinrichtungen beleuchteter Anteile der Mantelfläche.

Besonders bevorzugt ist in einem Strahlengang zwischen der zweiten Beleuchtungseinrichtung und dem Behältnis ein refraktives Element und insbesondere ein Linsenkörper vorgesehen. Besonders vorteilhaft ist auch in einem Strahlengang zwischen der ersten Beleuchtungseinrichtung und dem Behältnis ebenfalls ein refraktives Element und insbesondere ein Linsenkörper vorgesehen. Bei dem Linsenkörper handelt es sich bevorzugt um eine Linse und besonders bevorzugt um eine Fresnellinse.

Mit Hilfe der Fresnellinsen ist eine Beleuchtung des Behältnisses kegelförmig (bzgl. einer Behältnislängsachse) von oben und unten möglich. Dabei werden besonders bevorzugt Linsen mit einer Brennweite zwischen 350 mm und 430 mm bevorzugt, zwischen 370 mm und 410 mm und besonders bevorzugt zwischen 380 mm und 400 mm benutzt. Auf bzw. unter der Rillenseite der Fresnellinsen befinden sich ML2-Module mit integrierter Elektronik. Die Brennweite der Linse fokussiert das Licht über die Flaschenhöhe, so dass der Helligkeitsabfall, der mit wachsendem Abstand von der Beleuchtungseinrichtung auftritt, wenigstens teilweise durch die Fresnellinse kompensiert wird. Damit werden die üblicherweise senkrechten Flaschenseiten schräg unter einem flachen Winkel beleuchtet. Diese Art der Beleuchtung erlaubt die Erkennung von Knickkanten. Die Fresnellinsen bewirken, dass Licht, welches mit zunehmendem radialen Abstand von der Mittelachse der Fresnellinse durch diese hindurchtritt, zunehmend stärker zur Achse hin gebrochen wird. Durch die schräge Beleuchtung wird verhindert, dass Reflexe in die Bildaufnahmeeinrichtung gelangen.

Insbesondere im Falle der zweiten Beleuchtungseinrichtung wird als Linsenkörper nur ein Ausschnitt aus einer Linse und insbesondere einer Fresnellinse verwendet. Besonders bevorzugt wird der Linsenkörper gegenüber einer auf der Längsrichtung des Behältnisses senkrecht stehenden Ebene geneigt. Durch diese Neigung bzw. Kippung ist es möglich, auch von unten ein verbessertes kegelförmiges Licht auf die Flasche zu werfen. Dabei ist zu berücksichtigen, dass im unteren Bereich der Flasche diese üblicherweise keine verjüngten Abschnitte aufweist und damit die Beaufschlagung mit Licht hier etwas schwieriger ist als in dem oberen Bereich der Flasche.

Bei einer weiteren vorteilhaften Ausführungsform sind in dem Strahlengang zwischen den Behältnissen der Bildaufnahmeeinrichtung optische Mittel zum Umlenken des von der Mantelfläche zurückgeworfenen bzw. gestreuten Lichts vorgesehen. Besonders bevorzugt handelt es sich bei diesen optischen Mitteln um Spiegel zur Erzeugung mehrerer Abbildungsstrahlengänge, welche auf die Bildaufnahmeeinrichtung gelangen.

Besonders bevorzugt ist wenigstens ein optisches Mittel ein hochreflektiver Spiegel. Da, wie eingangs erwähnt, nur sehr wenig Licht von dem Behältnis zurückgeworfen wird, ist es erforderlich, dass dieses Licht möglichst ungedämpft zu der Bildaufnahmeeinrichtung gelangt. Die verwendeten Spiegel weisen dabei eine Reflektion von wenigstens 90 %, bevorzugt von wenigstens 95 %, und besonders bevorzugt von wenigstens 98 % auf. Dabei ist bevorzugt darauf zu achten, dass dieser hohe Reflektionsgrad in einem möglichst weiten Wellenlängenbereich, zumindest im sichtbaren Wellenlängenbereich, erreicht wird. Bei einer weiteren bevorzugten Ausführungsform ist die Vorrichtung so ausgelegt, dass das von dem Behältnis zurückgeworfene Licht maximal zweimal durch optische Mittel umgelenkt wird bzw. dass in jedem Strahlengang zwischen der Mantelfläche und der Bildaufnahmeeinrichtung maximal zwei optische Mittel vorgesehen sind. Auch hierdurch wird erreicht, dass möglichst wenig Intensität von dem von der Mantelfläche zurückgeworfenen Licht verloren geht. Besonders bevorzugt handelt es sich bei den optischen Elementen um lang gestreckte optische Elemente, die sich insbesondere entlang der Längsrichtung der Behältnisse erstrecken. Besonders bevorzugt sind dabei die optischen Mittel in der Längsrichtung des Behältnisses wenigstens so lang wie der zu beobachtende Abschnitt der Mantelfläche in der Längsrichtung.

Bei einer weiteren vorteilhaften Ausführungsform ist eine Transporteinrichtung zum Fördern der Behältnisse gegenüber den Beleuchtungseinrichtungen vorgesehen, wobei diese Transporteinrichtung neben dem der unteren Beleuchtungseinrichtung zugeordneten Linsenkörper angeordnet ist. Dabei kann der Linsenkörper, wie oben erwähnt, schräg gegenüber der Ebene der Transporteinrichtung wie beispielsweise eines Transportbandes sein. Es ist jedoch auch möglich, dass der Linsenkörper in der Längsrichtung des Behältnisses geringfügig gegenüber der Transporteinrichtung nach oben oder unten versetzt ist. Dies hängt u. a. auch von der Lage des zu untersuchenden Etiketts des Behältnisses ab.

Vorzugsweise weist die Vorrichtung eine besonders bevorzugt optische Erkennungseinrichtung auf, welche die Anwesenheit eines zu untersuchenden Behältnisses detektiert. Dabei handelt es sich besonders bevorzugt um eine Lichtschrankeneinrichtung. Sobald diese Lichtschrankeneinrichtung ein Behältnis erkannt hat, wird die Aufnahme eines Bildes ausgelöst.

Die vorliegende Erfindung ist weiterhin auf ein Verfahren zum Inspizieren von Behältnissen gerichtet. Dabei werden die Behältnisse beleuchtet und das von den Behältnissen zurückgeworfene Licht wird mit einer Bildaufnahmeeinrichtung aufgenommen. Erfindungsgemäß werden die Behältnisse mit einer ersten Beleuchtungseinrichtung, die oberhalb der Behältnisse angeordnet ist und mit einer zweiten Beleuchtungseinrichtung, die unterhalb des Behältnisses angeordnet ist.

Vorteile und Zweckmäßigkeiten sind der nachfolgenden Beschreibung in Verbindung mit den Zeichnungen zu entnehmen. Hierbei zeigen:
- Fig. 1: eine Draufsicht auf eine erfindungsgemäße Inspektionsvorrichtung;
- Fig. 2: eine Seitenansicht der Inspektionsvorrichtung aus Fig. 1;
- Fig. 3: eine perspektivische Ansicht der Inspektionsvorrichtung aus Fig. 1;
- Fig. 4: eine weitere Seitenansicht der erfindungsgemäßen Vorrichtung; und
- Fig. 5: eine Ansicht eines Linsenkörpers für eine erfindungsgemäße Vorrichtung.

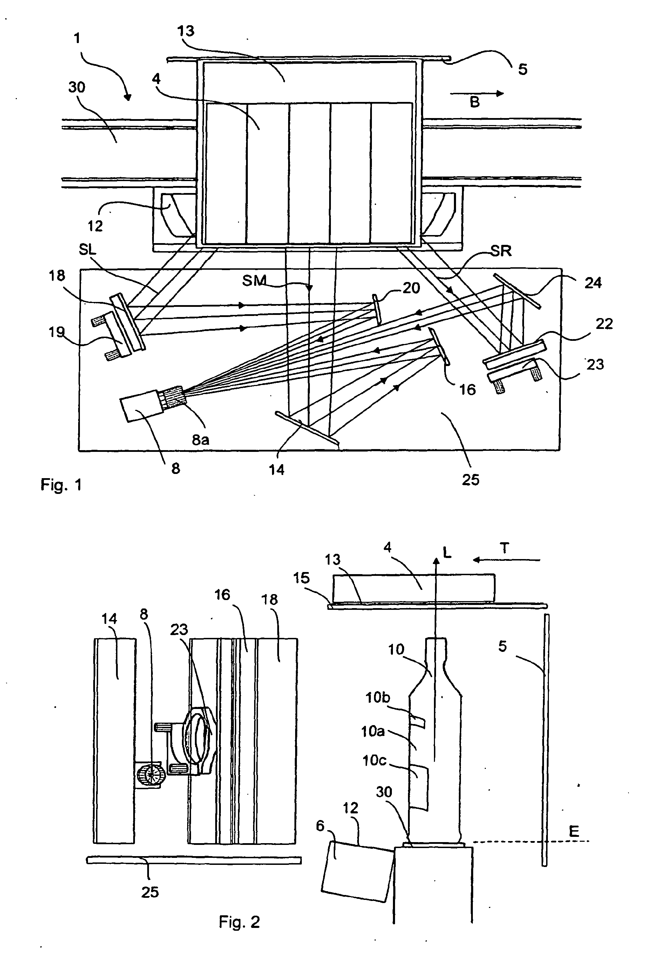

Fig. 1 zeigt eine Draufsicht auf eine erfindungsgemäße Inspektionsvorrichtung 1 für Behältnisse. Diese Vorrichtung weist eine Transporteinrichtung 30, wie beispielsweise ein Förderband auf, auf dem die Behältnisse in einer hier geradlinigen Bewegungsrichtung B geführt werden. Innerhalb der in ihrer Gesamtheit mit 1 bezeichneten Inspektionsvorrichtung gelangen die (in Fig. 1 nicht gezeigten) Behältnisse zwischen eine erste (obere) Beleuchtungseinrichtung 4 und eine zweite (untere) Beleuchtungseinrichtung, die hier jedoch durch einen Linsenkörper 12 verdeckt ist. Bei den Beleuchtungseinrichtungen handelt es sich jeweils um Module mit einer Vielzahl von Leuchtdioden (LED), hier mit einer 15° RGB-Abstrahlung. Dabei sind die einzelnen Module mit integrierter Elektronik versehen, wodurch der nötige Verkabelungsaufwand minimiert werden kann. Durch die beiden Beleuchtungseinrichtungen wird das Behältnis jeweils seitlich beleuchtet. Dabei ist zu beachten, dass die hier zu beleuchtenden Behältnisse üblicherweise bereits mit einer bestimmten Orientierung auf dem Transportband 30 ankommen.

Genauer gesagt ist hier bei allen transportierten Behältnissen das Etikett jeweils der unteren Beleuchtungseinrichtung zugewandt.

Neben der hier verwendeten Variante mit einer Vielzahl von roten, grünen und blauen LED's wäre auch die direkte Erzeugung von Weißlicht (bzw. einem weißlichtähnlichen Licht) möglich. Die Beleuchtungsdauer liegt jeweils in einem Bereich zwischen 100 und 500 Mikrosekunden und die Beleuchtung wird durch die oben erwähnte (nicht gezeigte) Lichtschrankeneinheit ausgelöst. Die beiden Beleuchtungseinrichtungen beleuchten dabei jeweils im Wesentlichen den vollständigen Bereich des zu untersuchenden Behältnisses bzw. der zu untersuchenden Etiketten. Die vierte Seite der Mantelfläche ist hier nicht mit Etiketten bestückt und daher für die Beobachtung uninteressant. Es wäre jedoch auch möglich, den in Fig. 1 gezeigten Aufbau achsensymmetrisch bezüglich des Förderbandes auf der gegenüberliegenden Seite noch einmal anzuordnen. Die oben erwähnte 15° RGB Abstrahlung bezieht sich dabei auf den Kegelwinkel der einzelnen verwendeten Leuchtioden.

Die Bestrahlung der Behältnisse bzw. derjenigen drei Seitenwände, welche im Etikett versehen sind, bewirkt, dass dieses Etikett selbst Licht reflektiert bzw. streut. Dieses allgemein zurückgeworfene Licht wird von einer Bildaufnahmeeinrichtung 8 aufgenommen. Da, wie eingangs erwähnt, aufgrund der dunklen Etiketten nur ein sehr hoher Lichtanteil absorbiert wird, werden für die Bildaufnahmeeinrichtungen spezielle Objektive verwendet, welche selbst bei einer voll geöffneten Blende ein durchgängig scharfes Bild erzeugen. Daneben wird eine Blende 8a bzw. Iris mit hoher Auflösung eingesetzt. Dabei ist zu beachten, dass etwaige Fehler der auf den Behältnissen angebrachten Etiketten bei ihrer Abbildung auf die Bildaufnahmeeinrichtung 8 oft nur ein Pixel breit sind.

Ausgehend von den Behältnissen tritt das Licht aus, wobei hier drei Strahlengänge SL, SM und SR gezeigt sind. Das Licht in diesen drei Strahlengängen wird jeweils über optische Mittel auf die Bildaufnahmeeinrichtung 8 gelenkt. Dabei wird bei der in Fig. 1 gezeigten Ausführungsform darauf geachtet, dass für jeden Strahlengang SL, SM und SR nur jeweils zwei Umlenkungen stattfinden. Für die Ablenkung in dem linken Strahlengang SL werden zwei Umlenkspiegel 18 und 20 eingesetzt, für den Strahlengang SM zwei Umlenkspiel 14 und 16 und für den Strahlengang SR zwei Umlenkspiegel 22 und 24. Die einzelnen Spiegel 14, 16, 18, 20, 22, 24 sind bevorzugt hoch reflektierende Oberflächenspiegel mit sehr hoher Planität. Derartige Spiegel werden beispielsweise auch für Scanner eingesetzt. Dabei wird auch darauf geachtet, dass die Spiegel in einem hohen Wellenlängenbereich, zumindest im sichtbaren Bereich, eine hohe Reflektivität aufweisen. Die Dicke der verwendeten Spiegel liegt zwischen 2 mm und 9 mm, bevorzugt zwischen 3 mm und 7 mm und besonders bevorzugt im Bereich von 5 mm.

Weiterhin ist die Spiegelanordnung so angelegt, dass sie möglichst wenig Fläche bzw. Bauraum benötigt. Bevorzugt ist die Anordnung der einzelnen Spiegel so gewählt, dass die gesamte Anordnung in übliche Gehäuse eingesetzt werden kann. Die Spiegel 14, 16, 20 und 24 sind fest auf einer Grundplatte angeordnet und werden damit lediglich im Rahmen der Einstellung geringfügig in ihrem Befestigungsbohrungen verrückt. Für diese Spiegel können bereits vorgefertigte Halteklötze verwendet werden. Vorzugsweise ist eine Grundplatte 25, auf der die Spiegel angeordnet sind, daher gegenüber der Transportbahn 30 geringfügig (zwischen 10 und 30 mm) abgesetzt. Die beiden Spiegel 16 und 20 sind jeweils einseitig gefasst, um die einzelnen Strahlengänge, insbesondere den Strahlengang SR, nicht zu behindern.

Die beiden Spiegel 18 und 22 sind jeweils auf stabilen Einstelleinrichtungen 19, 23 angeordnet. Diese Einstelleinrichtungen sind stabil an der Grundplatte 25 befestigt und erlauben eine leichtere Einrichtung der optischen Strahlengänge. Genauer gesagt ist mit den Einstelleinrichtungen 19 und 23 eine geringfügige Verkippung der Spiegel 18, 22 durch den Einsatz von Mikrometerschrauben möglich.

Es wird jedoch darauf hingewiesen, dass anstelle von Spiegeln auch andere Umlenkmittel, wie beispielsweise Prismen oder dergleichen eingesetzt werden können. Bevorzugt sind die Weglängen der einzelnen Strahlengänge SL, SM und SR gleich lang, damit die jeweiligen Bilder auf der Kamera zeitgleich aufgenommen werden können. Damit ist es möglich, das Etikett jeweils in genau der gleichen Größe auf der Kamera 8 abzubilden und gegebenenfalls die einzelnen Bilder übereinanderzuschieben.

Fig. 2 zeigt eine Seitenansicht der Beleuchtungsvorrichtung aus Fig. 1. Man erkennt, dass unterhalb der ersten Beleuchtungseinrichtung 4 ein refraktives Element 13, wie eine Fresnellinse, eingesetzt ist. Da, wie oben gesagt, insbesondere die vorderen und die beiden seitlichen Seiten der Mantelfläche 10a beobachtet werden müssen, da sich hier Etiketten 10b und 10c befinden, ist sowohl die Beleuchtungseinrichtung 4 als auch die Fresnellinse 13 in der Richtung T nicht zentral über der Längsrichtung L des Behältnisses sondern in Fig. 2 nach links versetzt. Genauer gesagt beginnt die obere Beleuchtungeinrichtung in einem Bereich zwischen 130 mm und 170 mm links bezüglich der Längsrichtung L. Zwar ragt die Fresnellinse 13 auch in Fig. 2 nach rechts, die Beleuchtungseinrichtung 4 jedoch weniger tief als die Linse, wie in Fig. 2 gezeigt. Das Bezugszeichen 6 bezieht sich auf die zweite Beleuchtungseinrichtung, die unterhalb des Behältnisses angeordnet ist. Innerhalb dieser Beleuchtungseinrichtung befindet sich ein zweiter Linsenkörper, genauer gesagt ein Ausschnitt aus einer weiteren Fresnellinse. Diese Linse ist gegenüber der Ebene E des Transportbandes 30 geneigt. Auf diese Weise kann ein kegelförmiges Licht auf das Behältnis 10 gestrahlt werden. Zur Beleuchtung werden auch für die zweite Beleuchtungseinrichtung zwei LED-Module vorgesehen. Das Bezugszeichen 15 bezieht sich auf ein unterhalb der Fresnellinse 13 angeordnetes Fenster. Der Linsenkörper 12 ist hier ebenfalls eine Fresnellinse bzw. ein Ausschnitt aus einer solchen.

In Fig. 2 ist lediglich die Halteeinrichtung 23 zu erkennen, die andere Halteeinrichtung 19 ist durch die Spiegel 16 und 18 verdeckt. Erkennbar ist noch der Spiegel 14, der, wie in Fig. 1 gezeigt, für die Umlenkung des Strahlengangs SM dient. An der Fresnellinse 13 kann noch ein Rahmen vorgesehen sein, der eine fensterartige Beleuchtung ermöglicht.

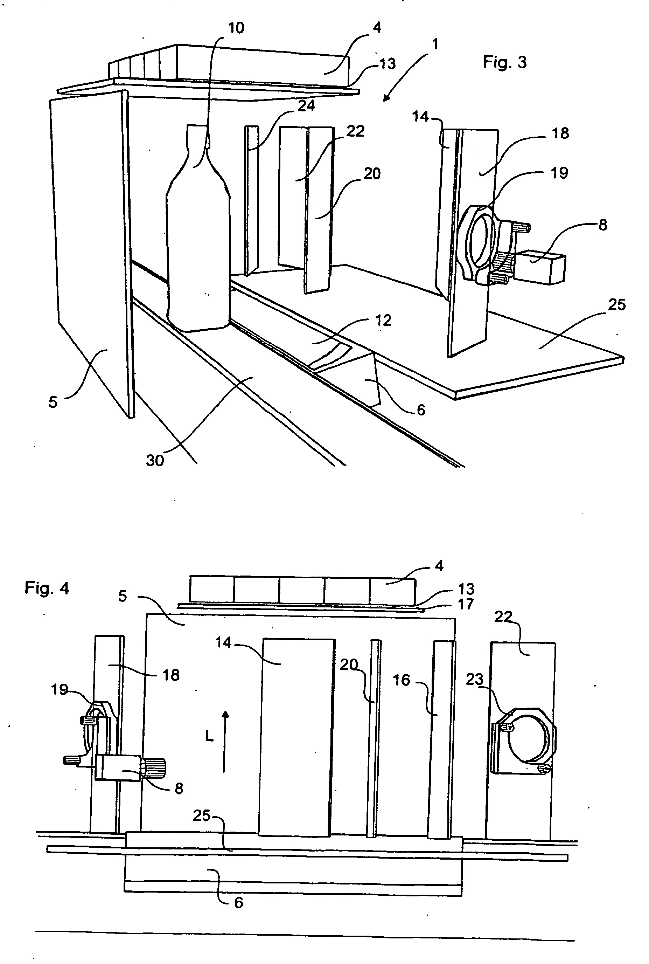

Fig. 3 zeigt eine perspektivische Darstellung der erfindungsgemäßen Vorrichtung. Man erkennt hier, dass die einzelnen Spiegel 16, 18, 20, 22, 24, 26 jeweils einen rechteckigen Querschnitt aufweisen und sich in der Längsrichtung der Behältnisse entlang eines wesentlichen Teils dieses Behältnisses (genauer vom Boden bis zu der Mündung) erstrecken. Diese erhebliche Höhe der Spiegel, die bevorzugt wenigstens 200 mm, besonders bevorzugt wenigstens 250 mm beträgt, ist vorteilhaft, damit gegebenenfalls auch schräge Ansichten durch die Inspektionsvorrichtung möglich sind. Dabei stehen alle Spiegeleinrichtungen senkrecht bezüglich der Befestigungsplatte 25. Die Beleuchtung durch die beiden Beleuchtungseinrichtungen 4 und 6 erfolgt kegelförmig von oben und unten. Genauer gesagt ergibt sich im Falle der ersten Beleuchtungseinrichtung ein sich von oben nach unten verjüngender Kegel und im Falle der unteren Beleuchtungseinrichtung ein sich von unten nach oben verjüngender Kegel. Das Bezugszeichen 5 bezieht sich auf eine Hintergrundplatte der Vorrichtung, die bevorzugt an der den Behältnis 10 zugewandten Seite weiß und damit streuend ausgebildet ist. Durch diese Ausführungsform kann sich (dunkle) Behältnis gegenüber der Hintergrundplatte abheben und damit kontrastreicher abgebildet werden.

Fig. 4 zeigt eine Draufsicht auf die erfindungsgemäße Vorrichtung, d. h. eine Sicht von der Seite, die auf die Frontseite der Behältnisse gerichtet ist. Dabei ist der in Fig. 1 gezeigte Spiegel 24 hier durch den Spiegel 22 verdeckt. Die in Fig. 4 gezeigte Anordnung erlaubt, wie oben gesagt, eine sehr günstige bzw. bauraumsparende Aufnahme des von der Oberfläche reflektierten Lichts. Die Bildaufnahmeeinrichtung ist in der längsrichtung L zwischen der unteren Beleuchtungseinrichtung 6 und der oberen Beleuchtungseinrichtung 4 angeordnet. Dabei ist die Bildaufnahmeeinrichtung hier in der unteren Hälfte zwischen den beiden Beleuchtungseinrichtungen vorgesehen. Auf diese Weise ist es möglich, auch Reflexe, die von den oberen, schrägen Bereichen des Behältnisses ausgehen können, besser zu unterdrücken. Zum Zeitpunkt der Bildaufnahme befindet sich das Behältnis 10 in seiner Bewegungsrichtung B bevorzugt zentral unter der ersten Beleuchtungseinrichtung 4. Diese erste Beleuchtungseinrichtung 4 steht hier senkrecht zu der Längsrichtung L.

Bevorzugt wird das Behältnis unter einem sehr flachen Winkel beleuchtet. Auf diese Weise wird auch verhindert, dass direkt reflektiertes Licht in die Bildaufnahmeeinrichtung gelangt.

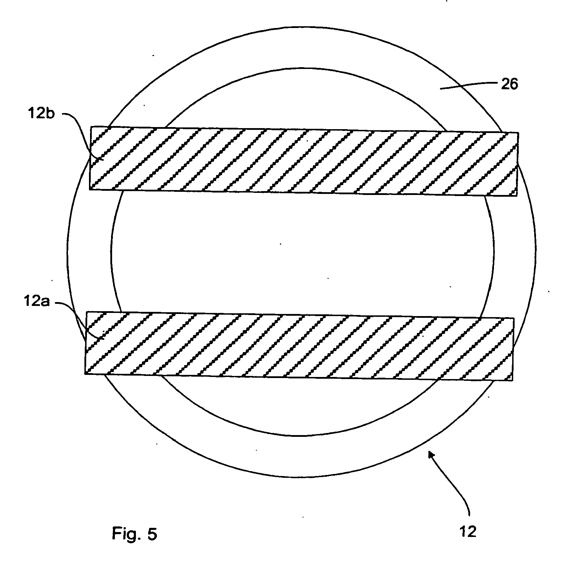

Fig. 5 zeigt eine Fresnellinse 12, die zur Herstellung des Linsenkörpers 12 verwandt werden kann. Genauer gesagt ist es möglich, aus einer vollständigen Linse 26 einen asymmetrischen Ausschnitt 12a herauszutrennen, der dann als Linsenkörper dient. Das Bezugszeichen 12b bezieht sich auf einen weiteren Ausschnitt, um zu veranschaulichen, dass aus einer vollständigen Linse jeweils zwei derartige Ausschnitte gewonnen werden können, wobei jeweils für eine Vorrichtung nur ein Ausschnitt verwendet wird. Der genaue zu wählende Linsenausschnitt 12 bestimmt sich nach dem Ort der unteren Beleuchtungseinrichtung. Die Linse 12 weist hier einen unregelmäßigen Linsenrand 26 auf.

## Patentansprüche

1. Etiketteninspektionsvorrichtung (1) für etikettierte Behältnisse (10) mit einer ersten Beleuchtungseinrichtung (4) welche wenigstens einen Anteil der mit einem Etikett versehenen Mantelfläche (10a) des Behältnisses beleuchtet, einer Bildaufnahmeeinrichtung (8) welche das von der Beleuchtungseinrichtung (4) auf die mit dem Etikett versehene Mantelfläche (10a) ausgestrahlte und von der Mantelfläche (10a) zurückgeworfene Licht wenigstens teilweise aufnimmt, wobei die erste Beleuchtungseinrichtung (4) in einer Längsrichtung (L) des Behältnisses (10) wenigstens teilweise oberhalb des von der ersten Beleuchtungseinrichtung (4) beleuchteten Anteils der Mantelfläche (10a) angeordnet ist, und einer zweiten Beleuchtungseinrichtung (6)
**dadurch gekennzeichnet, dass**
die zweite Beleuchtungseinrichtung (6) unterhalb des Behältnisses (10) angeordnet ist und einen Anteil der mit dem Etikett versehenen Mantelfläche (10a), wobei das Etikett der zweiten Beleuchtungseinrichtung (6) zugewandt ist, beleuchtet, wobei die zweite Beleuchtungseinrichtung (6) in der Längsrichtung (L) des Behältnisses (10) unterhalb sämtlicher von beiden Beleuchtungseinrichtungen (4, 6) beleuchteten Anteile der Mantelfläche (10a) und seitlich versetzt dazu angeordnet ist und wobei die Inspektionsvorrichtung eine Transporteinrichtung (30) aufweist, auf der die Behältnisse in einer geradlinigen Bewegungsrichtung (B) transportiert werden.

2. Inspektionsvorrichtung nach Anspruch 1,
**dadurch gekennzeichnet, dass**
die zweite Beleuchtungseinrichtung (6) vollständig unterhalb des Behältnisses (10) angeordnet ist.

3. Inspektionsvorrichtung nach wenigstens einem der vorangegangenen Ansprüche,
**dadurch gekennzeichnet, dass**
die erste Beleuchtungseinrichtung (4) vollständig oberhalb des Behältnisses (10) angeordnet ist.

4. Inspektionsvorrichtung nach wenigstens einem der vorangegangenen Ansprüche,
**dadurch gekennzeichnet, dass**
in einem Strahlengang zwischen der zweiten Beleuchtungseinrichtung (6) und dem Behältnis (10) ein Linsenkörper (12) vorgesehen.

5. Inspektionsvorrichtung nach Anspruch 4,
**dadurch gekennzeichnet, dass**
der Linsenkörper (12) ein Ausschnitt aus einer Linse und insbesondere aus einer Fresnellinse ist.

6. Inspektionsvorrichtung nach einem der Ansprüche 4 - 5,
**dadurch gekennzeichnet,dass**
der Linsenkörper (12) gegenüber einer auf der Längsrichtung (L) des Behältnis senkrecht stehenden Ebene (E) gekippt ist.

7. Inspektionsvorrichtung nach wenigstens einem der vorangegangenen Ansprüche,
**dadurch gekennzeichnet, dass**
wenigstens eine Beleuchtungseinrichtung (4,6) das Behältnis im Wesentlichen kegelförmig bezüglich einer Behältnisachse (L) beleuchtet.

8. Inspektionsvorrichtung nach wenigstens einem der vorangegangenen Ansprüche,
**dadurch gekennzeichnet, dass**
in dem Strahlengang (SL, SM, SR) zwischen dem Behältnis (10) und der Bildaufnahmeeinrichtung (8) optische Mittel (14, 16, 18, 20, 22, 24) zum Umlenken des von der Mantelfläche (10a) zurückgeworfenen Lichts vorgesehen sind.

9. Inspektionsvorrichtung nach Anspruch 7,
**dadurch gekennzeichnet, dass**
wenigstens ein optisches Mittel (14, 16, 18, 20, 22, 24) ein hochreflektiver Spiegel ist.

10. Inspektionsvorrichtung nach wenigstens einem der vorangegangenen Ansprüche,
**dadurch gekennzeichnet, dass**
in jedem Strahlengang (SL, SM, SR) zwischen der Mantelfläche (10e) und der Bildaufnahmeeinrichtung (8) maximal zwei optische Mittel (14, 16, 18, 20, 22, 24) vorgesehen sind.

11. Inspektionsvorrichtung nach wenigstens einem der vorangegangenen Ansprüche,
**dadurch gekennzeichnet, dass**
eine Transporteinrichtung (30) zum Fördern der Behältnisse (10) gegenüber den Bildaufnahmeeinrichtungen (4,6) vorgesehen ist, wobei diese Transporteinrichtung (30) neben dem Linsenkörper (12) angeordnet ist.

12. Inspektiensvorrichtung nach wenigstens einem der vorangegangenen Ansprüche,
**dadurch gekennzeichnet, dass**
eine Hintergrundplatte (5) der Inspektionsvorrichtung an der dem Behältnis (10) zugewandten Seite weiß und damit streuend ausgebildet ist, um das Behältnis (10) gegenüber der Hintergrundplatte (5) abzuheben und damit kontrastreicher abzubilden.

13. Verfahren zum Inspizieren von etikettierten Behältnissen (10), wobei wenigstens ein Anteil der mit einem Etikett versehenen Mantelfläche (10a) der Behältnisse (10) beleuchtet wird und das von den Behältnissen (10) zurückgeworfene Licht mit einer Bildaufnahmeeinrichtung (8) aufgenommen wird, wobei
die Behältnisse (10) mit einer ersten Beleuchtungseinrichtung (4), die oberhalb der Behältnisse (10) angeordnet ist, und mit einer zweiten Beleuchtungseinrichtung (6) beleuchtet werden, **dadurch gekennzeichnet, dass** die zweite Beleuchtungseinrichtung unterhalb der Behältnisse (10) und seitlich versetzt dazu angeordnet ist, wobei die Behältnisse (10) mit einer bestimmten Orientierung transportiert werden, so dass das Etikett zumindest der zweiten Beleuchtungseinrichtung (6) zugewandt wird.

## Claims

1. A label inspection apparatus (1) for labelled containers (10) with a first illumination device (4) which illuminates at least one portion of the external surface (10a) of the container provided with a label, an image recording device (8) which records at least in part the light which is emitted by the illumination device (4) onto the external surface (10a) provided with the label and which is reflected by the external surface (10a), wherein the first illumination device (4) is arranged in a longitudinal direction (L) of the container (10) at least in part above the portion of the external surface (10a) illuminated by the first illumination device (4), and a second illumination device (6), **characterized in that** the second illumination device (6) is arranged below the container (10) and illuminates a portion of the external surface (10a) provided with the label, wherein the label faces the second illumination device (6), wherein the second illumination device (6) is arranged in the longitudinal direction (L) of the container (10) below all the portions of the external surface (10a) illuminated by the two illumination devices (4, 6) and laterally offset therefrom, and wherein the inspection apparatus has a conveying device (30) on which the containers are conveyed in a straight direction (B) of movement.

2. An inspection apparatus according to claim 1, **characterized in that** the second illumination device (6) is arranged completely below the container (10).

3. An inspection apparatus according to at least one of the preceding claims, **characterized in that** the first illumination device (4) is arranged completely above the container (10).

4. An inspection apparatus according to at least one of the preceding claims, **characterized in that** a lens body (12) is provided in a beam path between the second illumination device (6) and the container (10).

5. An inspection apparatus according to claim 4, **characterized in that** the lens body (12) is a part of a lens, and in particular of a Fresnel lens.

6. An inspection apparatus according to any one of claims 4 to 5, **characterized in that** the lens body (12) is tilted with respect to a plane (E) situated at a right angle to the longitudinal direction (L) of the container.

7. An inspection apparatus according to at least one of the preceding claims, **characterized in that** at least one illumination device (4, 6) illuminates the container in a substantially tapered manner with respect to an axis (L) of the container.

8. An inspection apparatus according to at least one of the preceding claims, **characterized in that** optical means (14, 16, 18, 20, 22, 24) for deflecting the light reflected by the external surface (10a) are provided in the beam path (SL, SM, SR) between the container (10) and the image recording device (8).

9. An inspection apparatus according to claim 7, **characterized in that** at least one optical means (14, 16, 18, 20, 22, 24) is a highly reflective mirror.

10. An inspection apparatus according to at least one of the preceding claims, **characterized in that** a maximum of two optical means (14, 16, 18, 20, 22, 24) are provided in each beam path (SL, SM, SR) between the external surface (10a) and the image recording device (8).

11. An inspection apparatus according to at least one of the preceding claims, **characterized in that** a conveying device (30) is provided for conveying the containers (10) with respect to the image recording devices (4, 6), wherein this conveying device (30) is arranged adjacent to the lens body (12).

12. An inspection apparatus according to at least one of the preceding claims, **characterized in that** a background plate (5) of the inspection apparatus is made white - and therefore scattering - on the side facing the container (10), in order to accentuate the container (10) with respect to the background plate (5) and thus to image in with higher contrast.

13. A method of inspecting labelled containers (10), wherein at least one portion of the external surface (10a) of the containers (10) provided with a label is illuminated and the light reflected by the containers (10) is recorded by an image recording device (8), wherein the containers (10) are illuminated by a first illumination device (4) which is arranged above the containers (10) and by a second illumination device (6), **characterized in that** the second illumination device is arranged below the containers (10) and laterally offset therefrom, wherein the containers (10) are conveyed with a specified orientation, so that the label faces at least the second illumination device (6).

## Revendications

1. Système d'inspection d'étiquettes (1) pour des récipients (10) étiquetés, avec un premier dispositif d'éclairage (4) éclairant au moins une partie de la surface d'enveloppe (10a) du récipient pourvue d'une étiquette, avec un dispositif d'enregistrement d'images (8) qui reçoit au moins partiellement la lumière émise par le dispositif d'éclairage (4) vers la surface d'enveloppe (10a) et réfléchie par la surface d'enveloppe (10a), le premier dispositif d'étiquetage (4) étant disposé dans la direction longitudinale (L) du récipient (10) au moins partiellement au-dessus de la partie de la surface d'enveloppe (10a) éclairée par le premier dispositif d'éclairage (4), et avec un deuxième dispositif d'éclairage (6),
**caractérisé en ce que** le deuxième dispositif d'éclairage (6) est disposé en dessous du récipient (10) et éclaire une partie de la surface d'enveloppe (10a) pourvue de l'étiquette, l'étiquette étant tournée vers le deuxième dispositif d'étiquetage (6), le deuxième dispositif d'étiquetage (6) étant disposé dans la direction longitudinale (L) du récipient (10) en dessous de toutes les parties de la surface d'enveloppe (10a) éclairées par les deux dispositifs d'éclairage (4, 6), et étant latéralement décalé de celles-ci, et le dispositif d'inspection comportant un dispositif de transport (30) sur lequel les récipients sont transportés dans une direction de déplacement (B) en ligne droite.

2. Système d'inspection selon la revendication 1,
**caractérisé en ce que** le deuxième dispositif d'éclairage (6) est disposé entièrement en dessous du récipient (10).

3. Système d'inspection selon au moins une des revendications précédentes,
**caractérisé en ce que** le premier dispositif d'éclairage (4) est disposé entièrement au-dessus du récipient (10).

4. Système d'inspection selon au moins une des revendications précédentes,
**caractérisé en ce qu'**un corps de lentille (12) est prévu sur un trajet de rayon entre le deuxième dispositif d'éclairage (6) et le récipient (10).

5. Système d'inspection selon la revendication 4,
**caractérisé en ce que** le corps de lentille (12) est un fragment d'une lentille et en particulier d'une lentille de Fresnel.

6. Système d'inspection selon la revendication 4 ou 5,
**caractérisé en ce que** le corps de lentille (12) est pivoté dans un plan (E) perpendiculaire à la direction longitudinale (L) du récipient.

7. Système d'inspection selon au moins une des revendications précédentes,
**caractérisé en ce qu'**au moins un dispositif d'éclairage (4, 6) éclaire le récipient en formant sensiblement un cône par rapport à un axe du récipient (L).

8. Système d'inspection selon au moins une des revendications précédentes,
**caractérisé en ce que** des moyens optiques (14, 16, 18, 20, 22, 24) pour dévier la lumière réfléchie par la surface d'enveloppe (10a) sont prévus sur le trajet de rayon (SL, SM, SR) entre le récipient (10) et le dispositif d'enregistrement d'images (8).

9. Système d'inspection selon la revendication 7,
**caractérisé en ce qu'**au moins un moyen optique (14, 16, 18, 20, 22, 24) est un miroir fortement réfléchissant.

10. Système d'inspection selon au moins une des revendications précédentes,
**caractérisé en ce que** deux moyens optiques (14, 16, 18, 20, 22, 24) au maximum sont prévus sur chaque trajet de rayon (SL, SM, SR) entre la surface d'enveloppe (10a) et le dispositif d'enregistrement d'images (8).

11. Système d'inspection selon au moins une des revendications précédentes,
**caractérisé en ce qu'**un dispositif de transport (30) pour le transport des récipients (10) relativement aux dispositifs d'enregistrement d'images (4, 6) est prévu, ledit dispositif de transport (30) étant disposé à côté du corps de lentille (12).

12. Système d'inspection selon au moins une des revendications précédentes,
**caractérisé en ce qu'**une plaque d'arrière-plan (5) du système d'inspection est réalisée sur le côté opposé au récipient (10), blanche et par conséquent dispersive, pour détacher le récipient (10) sur la plaque d'arrière-plan (5) et par conséquent lui donner une image plus contrastée.

13. Procédé d'inspection de récipients (10) étiquetés, au moins une partie de la surface d'enveloppe (10a) des récipients (10) pourvue d'une étiquette étant éclairée et la lumière réfléchie par les récipients (10) étant reçue par un dispositif d'enregistrement d'images (8), les récipients (10) étant éclairés par un premier dispositif d'éclairage (4) disposé au-dessus des récipients (10), et par un deuxième dispositif d'étiquetage (6),
**caractérisé en ce que** le deuxième dispositif d'éclairage (6) est disposé en dessous des récipients (10) et latéralement décalé de ceux-ci, les récipients (10) étant transportés avec une orientation définie, de manière à tourner l'étiquette au moins vers le deuxième dispositif d'étiquetage (6).
